# EUROPEAN PATENT APPLICATION

(11) **EP 4 502 362 A1**
(43) Date of publication of application: **05.02.2025**
(21) Application number: 23382815.1
(22) Date of filing: 04.08.2023
(51) Int. Cl.: F03D 1/06, B29C 70/88, B29D 99/00, F03D 80/40

(54) **WIND TURBINE BLADE INTEGRATING AN ICE PROTECTION SYSTEM AND MANUFACTURING METHOD THEREOF**

(71) Applicant: Siemens Gamesa Renewable Energy Innovation & Technology S.L., 31621 Sarriguren (Navarra) (ES)
(72) Inventor: The designation of the inventor has not yet been filed
(74) Representative: SGRE-Association

(57) **Abstract**

The invention refers to a wind turbine blade formed by two shell halves, wherein one shell half has a first pair of metallic sheets layered, on the outer surface of the shell half, and wherein each of the metallic sheets has been partially embedded within the shell half during the resin infusion process. A first heating mat made of an electrically conductive material is layered on resin-free parts of the metallic sheets, and is also embedded within the shell half so that the first heating mat is electrically in contact with the resin-free parts of the metallic sheets. The invention also refers to a method for manufacturing a wind turbine blade, integrating an Ice Protection System, the method comprising the steps of manufacturing first and second shell halves by means of a resin infusion process, and integrating an Ice Protection System in the same resin infusion process for manufacturing the shell halves.

## Description

### TECHNICAL FIELD

The present invention relates to the manufacture of wind turbine blades.

The object of the invention is to provide a wind turbine blade incorporating an Ice Protection System (IPS) with an improved electrical connector, that results in reduced manufacturing costs, cycle time and man hours.

### BACKGROUND OF THE INVENTION

The formation of ice on rotor blades of a wind turbine during cold conditions, has a detrimental effect on the performance of the wind turbine, because it alters the aerodynamic properties of the blade. The accumulated weight of the ice on the rotor blades can also result in unwanted loading of the wind turbine. Therefore, some efforts have been invested in avoiding the build-up of ice, or to melt ice deposits that have already formed on the rotor blades.

One known solution is to use a mat of electrically conductive fibres (e.g. carbon fibres) applied to the exterior of a previously manufactured and finished rotor blade. When the poles of a current supply are connected to opposite ends of the mat, the current flowing through the mat heats the fibres and prevents ice from building up, or causes an existing ice layer to melt and slide off.

A problem associated with the known approach is that it is difficult to form a reliable electrical connection between the fibre mat and the poles of the current supply. Known connection means may fail sooner or later as a result of unavoidable dynamic influences such as blade vibration, extreme temperature differences, material deterioration owing to sunlight, corrosion due to high humidity, etc., since the de-icing mat is mounted onto the exterior of the blade and it is therefore exposed to all weather conditions.

Furthermore, for a mat arranged on the outer surface of the blade, any metal components used to connect it to the current supply may act as attractors, and a flashover may occur from a lightning protection means to such a metal component during a lightning strike, or the metal component itself may be struck by lightning. As a result, the known approaches are also vulnerable to damage during a lightning strike.

The European patent EP-2754891 B1 describes a de-icing arrangement of a wind turbine (1), as represented in Figures 1 and 2, consisting in three rotor blades (2), each one with a de-icing arrangement formed by an electrically conductive mat (3) embedded in the body of a rotor blade (2) and connected to a current supply (4) by means of leads (5). During very cold conditions, the heat dissipated in the mats (3) of the de-icing arrangement can prevent the build up of ice on the rotor blades (2), particularly along the leading edges of the blades (2), and/or can thaw any ice deposits that may have formed. The conductive mat (3) is attached to the conductive mat by means of bolts, to assure constant pressure along the connection.

The European patent EP-2715128 B1 describes a blade for a rotor of a wind turbine, said blade comprising: a blade body element comprising a carrier surface to accommodate a heating element, an electrically conductive, elongated and substantially planar heating element disposed upon the carrier surface to extend longitudinally substantially along at least the leading edge of the blade. The heating element comprises multi-axial carbon fabric. An electrical power supplying conductor element is located at one end of the heating element, the conductor element substantially extending over the width of the heating element on both, opposing sides and along the respective opposing surfaces thereof, and electrically coupling thereto on said both sides and via said respective surfaces.

It should be noted that the solutions described in the above-mentioned patent publications, the electrical connections to the blade are installed after the blade has been constructed, which makes the entire manufacturing process complicated and expensive.

Therefore, integration of the electrical connectors (i.e. the interface between the carbon mats and power cables) for blades equipped with Icing Protection Systems (IPS), remains a challenge in the manufacture of wind turbine blades.

On other note, examples of methods for manufacturing a wind turbine blade by means of a resin infusion process, are described in the European patent applications EP-3885112 A1 and EP-1310351 A1.

### SUMMARY OF THE INVENTION

The invention is defined in the attached independent claims, and satisfactorily solves the above-described drawbacks of the prior art, by integrating an Icing Protection Systems (IPS) comprising electric connectors and heating mat or mats during the blade manufacturing, so that the electrical connectors are completely integrated and bonded to the rotor blade body.

The integration of a heating system electrical connector according to the invention, involve the integration of a copper or another metallic material conductor, on at least one blade half during its manufacturing process. This conductor material may be isolated or connected to a metallic block inside the half blade piece.

More specifically, an aspect of the invention refers to a wind turbine blade integrating an Ice Protection System (IPS) which involves systems for de-icing, i.e. removing ice from blade and/or anti-icing, i.e. avoid ice cumulation on blade surfaces. The wind turbine blade is formed by two shell halves manufactured by means of a first composite manufacturing process such as a resin infusion process, and assembled together, that is, joined at their leading and trailing edges by bonding to configure a rotor blade.

Each shell half has an outer surface (mould side during the infusion process), an inner surface (bag side during the infusion process), a root side (the one closer to the root of the blade), a tip side (the one closer to the tip of the blade), a leading edge and a trailing edge.

According to the invention, at least one of the shell halves has a first pair of metallic sheets or meshes layered, at different radiuses, that is, at differences distances from the root end, on the outer surface of the shell half. These metallic sheets or meshes are flexible so they can be adapted to the curvature of the outer surface of the shell.

Each of the metallic sheets has been partially embedded within the shell half during the resin infusion process (during manufacture of the blade half), so that the metallic sheets are bonded to the shell. A part of each metallic sheet is covered by resin and another part of each metallic sheet is free of resin, which is realized by covering a part of the metallic sheets with a protective material before the infusion process, to prevent resin from adhering on the protected surface of the metallic sheets, and after the resin infusion, the protective material is removed.

The blade further comprises a first heating mat made of an electrically conductive material, for example a carbon fiber material, layered on the resin-free parts of the metallic sheets, that is, overlapping and in contact with the resin-free parts of the metallic sheets.

The first heating mat is also embedded and bonded into the shell half in a composite manufacturing process subsequent to the first composite manufacturing process, so that the first heating mat is in electrical contact with the resin-free parts of the metal sheets. In this way, a permanent electrical connection is established between the heating mat and the metal sheets so that a current can circulate through the metal sheets and the heating mat thereby configuring an (IPS) integrated into the blade during its manufacture.

The subsequent composite manufacturing process, may involve a second resin infusion process as the one used for the manufacture of the shell halves as described in the method of the invention, or alternatively it may involve "hand lay-up" wherein dry fibers are impregnated by hand with the resin and then vacuum is applied while curing the resin.

In a preferred embodiment of the invention, a first shell half is provided with a first pair of metallic sheets, and a second shell half is provided with a second pair of metallic sheets. A part of the first heating mat is layered on the outer surface of the first shell half and it is electrically in contact with the resin-free parts of the first pair of metallic sheets. Another part of the first heating mat is layered on the outer surface of the second shell half and it is electrically in contact with the resin-free parts of the metallic sheets of the second pair of metallic sheets. The first heating mat is layered once the two shell halves have been assembled together, to configure a wind turbine blade, so the heating mat is folded over the curvature of the outer surface of the blade, preferably on the leading edge.

In another preferred embodiment of the invention, the first heating mat overlaps only on a part of the surface of resin-free parts of the first pair of metallic sheets of the first and second pairs, so that another part of the surface of the resin-free parts of the first pair of metallic sheets is not covered by the first heating mat. The turbine blade further comprises a third pair of metallic sheets layered individually on the first heating mat and on the surface of the metallic sheets of the first and second pairs sheets which are not covered by the first heating mat.

The third pair of metallic sheets are also embedded within the shells by means of an subsequent composite manufacturing process either by a second resin infusion process or hand lay-up as described before, during the manufacture of the blade, and are electrically in contact with the first heating mat and with the surface of the metallic sheets of the first and second pairs of metallic sheets which are not covered by the first heating mat.

In another preferred embodiment of the invention, only the first shell half has a first pair of metallic sheets, and the second shell half has no metallic sheets. A part of the first heating mat is layered on the external surface of the first shell half and on the resin-free parts of the first pair of metallic sheets, and another part of the first heating mat is layered on the outer surface of the second shell half. The blade further comprises a third pair of metallic sheets, each one of these metallic sheets layered individually on the first heating mat and on the surface of the metallic sheets of the first pair of sheets not covered by the first heating mat. The third pair of metallic sheets are embedded within the first and second shell halves, by means of an subsequent composite manufacturing process (either by a second resin infusion process or hand lay-up as described before),, and are electrically in contact with the first heating mat and with the first pair of metallic sheets of the first shell half.

In another preferred embodiment of the invention, a first shell half has a first pair of metallic sheets, and a first heating mat layered on the adhesive tape-free parts of the metallic sheets of the first pair. The second shell half has a second pair of metallic sheets layered on the outer surface of the second shell half, and a second heating mat layered on the adhesive tape-free parts of the metallic sheets of the second pair of metallic sheets. The turbine blade further comprises a third heating mat layered on part of the resin-free parts of the metallic sheets of the first and second shell halves. The first and second heating mats are embedded within the first and second shell halves by means of the same resin infusion process carried out for the manufacture of the shell halves. The third heating mat can be integrated by a second resin infusion process or by hand lay-up and hand applied resin, so in any case the third heating mat gets electrically connected with the metallic sheets of the first and second shell halves.

Preferably, the third heating mat is also layered on part on the first and second heating mats, such that the third heating mat is electrically in contact also with the first and second heating mats.

Optionally, a third pair of metallic sheets is layered on the third heating mat and on the resin-free surfaces of the first and second pairs of metallic sheets.

The wind turbine blade of the above-described embodiments conventionally includes electric wires connected to the metallic sheets of the first and/or second pairs, for circulating electric current through the heating mats to operate as an (IPS).

Optionally, at least one layer of composite material is layered on the metallic sheets of the first, second or third pairs.

Another aspect of the invention refers to a method for manufacturing a wind turbine blade integrating an Ice Protection System. The method comprises the steps of manufacturing first and second shell halves by means of a resin infusion process, wherein at least one of the shell halves is manufactured by means of the following process:
layering a first pair of metallic sheets or meshes on one of the sides of a dry laminate, wherein the metallic sheets are layered at different radiuses of the dry laminate, and wherein a part or all of the outer surface of the metallic sheets are covered by a protective material,
enclosing the dry laminate into a closed mould formed by a rigid mould and a vacuum bag, in a way that the side of the dry laminate having the metallic sheets is facing the rigid mould, and the other side of the dry laminate is facing the vacuum bag,
infusing resin (first infusion step) into the closed mould by generating vacuum inside the closed mould,
curing the resin so as to form a rigid shell half,
demoulding the rigid shell half and removing the protective material, so that resin free surfaces on the metallic sheets are exposed.

After fabricating the two shells, these are assembled together by bonding their leading and trailing edges, so as to configure a turbine blade.

Furthermore, in the method according to the invention, a first heating mat made of an electrically conductive material, is layered on the resin-free parts of the metallic sheets, such that the heating mat is electrically in contact with the resin-free parts of the metallic sheets, and then the first heating mat is bonded to the turbine blade by means of a composite manufacturing process subsequent to the first infusion process.

The subsequent composite manufacturing process, may involve a second resin infusion process as the one used for the manufacture of the shell halves, or it may involve "hand lay-up" in which dry fibers are impregnated by hand with the resin and then vacuum is applied while curing the resin.

The first and second shell halves are manufactured to have a pair of metallic sheets, and the heating mat is also layered on the resin-free parts of both pairs of metallic sheets before the subsequent composite manufacturing process (either by a second resin infusion or hand lay-up as described before), and wherein the first heating mat is layered on the shell halves once they have been assembled together.

Preferably, the first heating mat is layered to overlap only on a part of the surface of resin-free parts of the metallic sheets, so that another part of the surface of the resin-free parts of the metallic sheets is not covered by the first heating mat. The method comprises the step of layering a third pair of metallic sheets on the first heating mat and on the surface of the metallic sheets of the first pair of sheets which are not covered by the first heating mat, so that by means of the subsequent composite manufacturing process (either by a second resin infusion or hand lay-up as described before), the third pair of metallic sheets get bonded and electrically in contact with the first heating mat and with the parts of the metallic sheets which are not covered by the first heating mat.

Alternatively, the first heating mat is layered only on the resin-free parts of the first pair of metallic sheet, and a second heating mat is then layered only on the resin-free parts of the second pair of metallic sheets. The third heating mat is layered on the resin-free parts of the first and second pairs of metallic sheets, and optionally also overlapping the first and second heating mats.

Preferably, the first, the second or third heating mats, or all the mats, are made of a carbon fiber material.

### BRIEF DESCRIPTION OF THE DRAWINGS

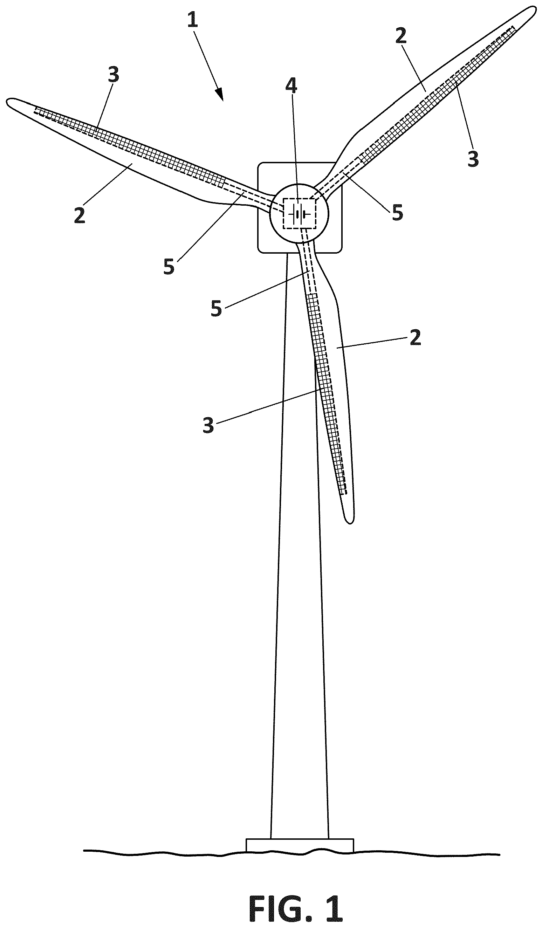

Figure 1.- shows a conventional wind turbine incorporating a IPS in the three blades, according to the prior art.
Figure 2.- shows in more detail one of the wind turbine blades of Figure 1.
Figure 3.- shows in a schematic representation and in perspective view a laminate having two metallic sheets, for the manufacture of a shell half, according to the invention.
Figure 4.- shows in Figure 4A the laminate of Figure 3 incorporating a layer of composite material; in Figure 4B two laminates are shown side by side for the manufacture of two shell halves; and in Figure 4C additionally incorporating a first heating mat.
Figure 5.- shows a similar representation than Figure 4 but including an additional pair of metallic sheets.
Figure 6.- shows in Figures 6A and 6B a sequence for the manufacture of a preferred embodiment of the invention.
Figure 7.- shows in Figures 7A and 7B a sequence for the manufacture of another preferred embodiment of the invention.
Figure 8.- shows another preferred embodiment of the invention.

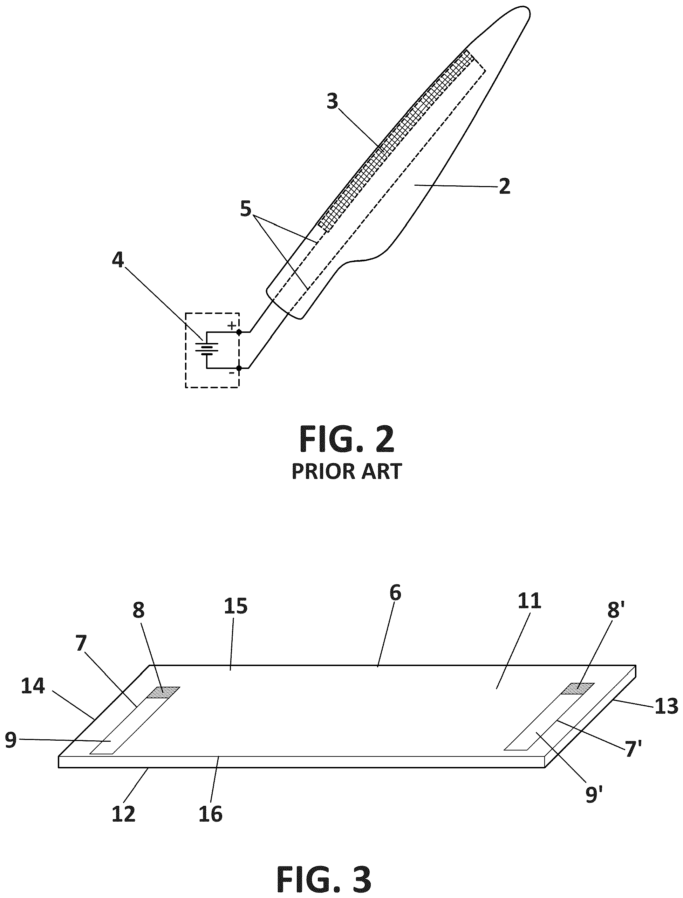

Note that in Figures 3 to 8 the blade halves are represented as a flat bodies for the sake of simplicity of the illustration, not considering the curvature that the blade halves typically have. Figures 3 to 8 illustrate different stages of the manufacturing process of different embodiments of the invention.

### DESCRIPTION OF PREFERERED EMBODIMENTS OF THE INVENTION

Figure 3 shows a shell half (6) made of a laminate of composite material. The shell half (6) has an outer surface (11), an inner surface (12), a root side (13), a tip side (14), a trailing edge (15) and a leading edge (16).

The shell half (6) has a first pair of metallic sheets (7,7') layered, at different radiuses, (at different distances from the root side (13)), on the outer surface (11) of the shell half (6). These metallic sheets (7,7') in this example have the shape of rectangular sheets, but they could have any other shape or configuration, for example, they may consist of metallic meshes.

These metallic sheets (7,7') have been partially embedded within the shell half during the same resin infusion process carried out for the manufacture of the shell halves, and in a way that a part or surface (8,8') of each metallic sheet (7,7') is exposed so that it will be covered by resin and therefore it will be bonded to the shell half (6) after the resin infusion and curing process, and another part or surfaces of each metallic sheet is free of resin. This may be realized by masking the desired surfaces (7,7') for example with an adhesive tape (9,9'), before infusing resin into the laminate.

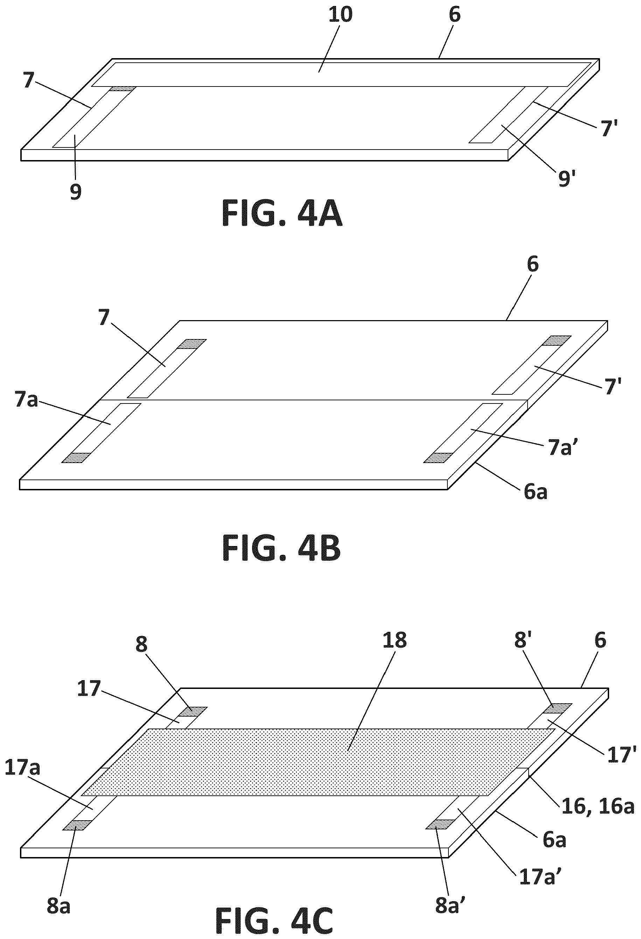

Optionally, and as represented in Figure 4A, at least one layer (10) of conductive fiber material is layered before infusing resin, on the surfaces of the metallic sheets (7,7'), which are not covered by the adhesive tape (9,9'), so this layer (10) will be bonded to the shell half (6) once the resin is cured.

As shown in Figure 4B, two identical shell halves (6,6a) are resin infused separately, the first shell half (6) provided with a first pair of metallic sheets (7,7'), and a second shell half (6a) is provided with a second pair of metallic sheets (7a,7a'). The two shell halves (6,6a) are joined at the leading and trailing edges to configure a wind turbine blade (2). Even if Figure 4B shows the two shell halves (6,6a) side by side at their leading edges only for the sake of the illustration, it should be understood that, in practice, the shell halves (6,6a) are joined at their leading and trailing edges.

As shown in Figure 4C, once the adhesive tapes (9,9') are removed after the first resin infusion process, resin free surfaces (17,17',17a,17a') are formed on the metallic sheets (7,7',7a,7a'). Then, a first heating mat (18) made of an electrically conductive material, for example carbon fiber, is layered on the resin free surfaces (17,17',17a,17a') of the metallic sheets (7,7',7a,7a'). The first heating mat (18) is also embedded within the shell halves (6,6a) during a composite manufacturing process subsequent to the first infusion process, so that the first heating (18) mat is electrically in contact with the resin free surfaces (17,17',17a,17a') of the metallic sheets (7,7',7a,7a').

The subsequent composite manufacturing process involves a second resin infusion process or a hand lay-up as described before.

It should be noted in Figure 4C, that the first heating (18) is applied on the leading edges (16,16a) of the shell halves (6,6a), so in practice it would serve for de-icing the leading edge area of a wind turbine blade.

Furthermore, it should be noted also in Figure 4C, that the first heating (18) does not overlap on the entire surface of the resin free surfaces (17,17',17a,17a') of the metallic sheets (7,7',7a,7a'), so that part of those resin free surfaces are exposed.

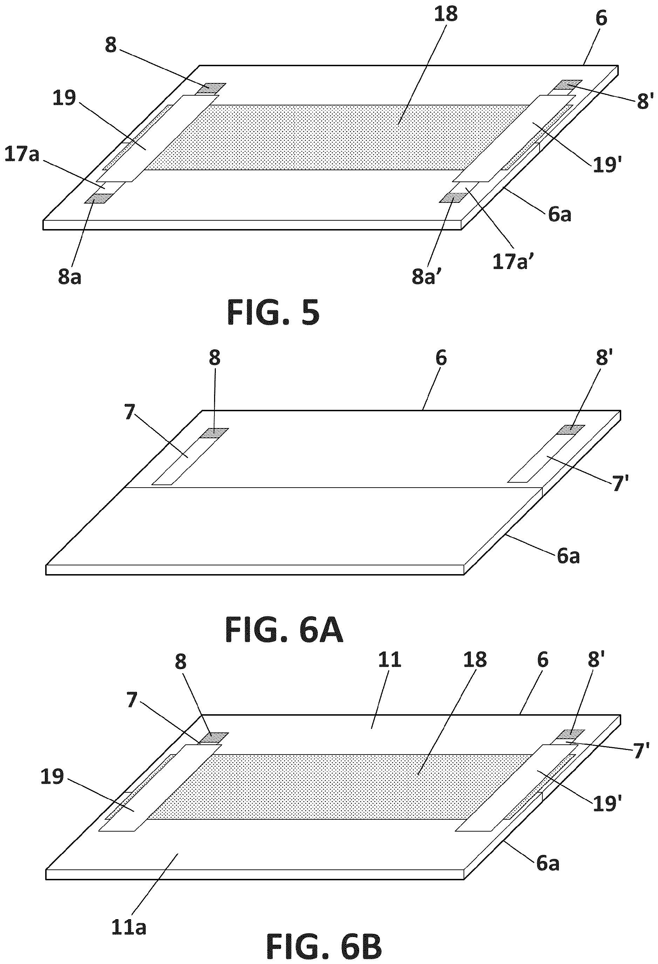

In the embodiment of Figure 5, a third pair of metallic sheets (19,19') are layered individually on the first heating mat (18) and on the part of the surfaces of the metallic sheets of the first and second pairs of sheets (7,7',7a,7a'), which are not covered by the first heating mat (18). The third pair of metallic sheets (19,19') are also embedded within the shell halves (6,6a) by means of the subsequent composite manufacturing process as described above, and are electrically in contact with the first heating mat (18) and with the surface of the metallic sheets of the first and second pairs of metallic sheets which are not covered by the first heating mat (18).

In the alternative embodiment of Figures 6A,6B, only the first shell half (6) has a first pair of metallic sheets (7,7'), that is, the second shell half (6a) is free of metallic sheets. The first heating mat (18) is layered on the resin-free parts of the first pair of metallic sheets (7,7'), and another part of the first heating mat (18) is layered on the outer surface (11a) of the second shell half (6a). A third pair of metallic sheets (19,19') are layered individually on the first heating mat (18), and on the surface of the metallic sheets of the first pair of sheets (7,7') not covered by the first heating mat (18).

The third pair of metallic sheets (19,19') are embedded within the first and second shell halves by means of the subsequent composite manufacturing process as described above, and are electrically in contact with the first heating mat and with the first pair of metallic sheets of the first shell half.

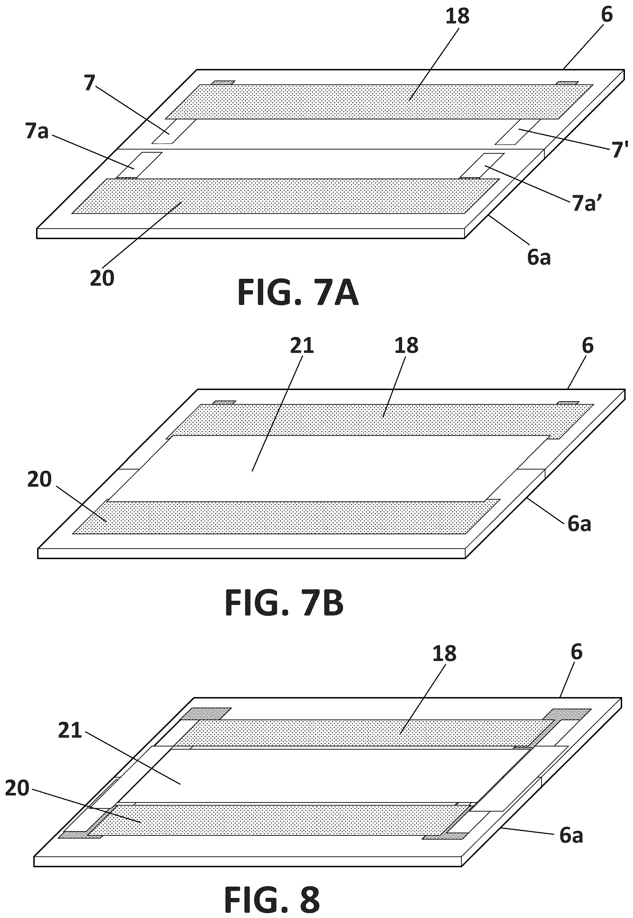

In the alternative embodiment of Figures 7A,7B, the first shell half (6) has a first pair of metallic sheets (7,7'), and a first heating mat (18) layered on the resin-free parts of the metallic sheets (7,7') of the first pair. The second shell half (6a) has a second pair of metallic sheets (7a,7a') layered on the outer surface of the second shell half (6a), and a second heating mat (20) also made of an electrically conductive material e.g. carbon fiber, is layered on the resin-free parts of the metallic sheets (7a,7a') of the second pair of metallic sheets.

A third heating mat (21) also made of an electrically conductive material e.g. carbon fiber, is then layered on part of the first and second heating mats (18,20), such that the third heating mat is electrically in contact also with the first and second heating mats. Additionally, the third heating mat (21) is also layered on part of the resin-free parts of the metallic sheets of the first and second shell halves (6,6a) after the first resin infusion process, and later on bonded by the subsequent composite manufacturing process described above.

The alternative embodiment shown in Figure 8, the third heating mat (21) does not overlap on the first and second heating mats (18,20), so it is only in electrical contact with the resin-free parts (17,17',17a,17a') of the metallic sheets of the first and second shell halves.

## Claims

1. A wind turbine blade integrating an Ice Protection System, wherein the blade is formed by two shell halves assembled together and manufactured by means of a resin infusion process, and wherein each shell half has an outer surface, an inner surface, a root side, a tip side, a trailing edge and a leading edge, **characterized in that**,
at least one of the shell halves has a first pair of metallic sheets layered, at different radiuses, on the outer surface of the shell half, and wherein each of the metallic sheets has been partially embedded within the shell half during the resin infusion process in a way that a part of each metallic sheet is covered by resin and another part of each metallic sheet is free of resin, and
wherein the blade further comprises a first heating mat made of an electrically conductive material layered on the resin-free parts of the metallic sheets, and wherein the first heating mat is also embedded within the shell half so that the first heating mat is electrically in contact with the resin-free parts of the metallic sheets.

2. A wind turbine blade according to claim 1, wherein a first shell half is provided with a first pair of metallic sheets, and a second shell half is provided with a second pair of metallic sheets, and wherein a part of the first heating mat is layered on the outer surface of the first shell half and it is electrically in contact with the resin-free parts of the first pair of metallic sheets, and another part of the first heating mat is layered on the outer surface of the second shell half and it is electrically in contact with the resin-free parts of the metallic sheets of the second pair of metallic sheets.

3. A wind turbine blade according to claim 2, wherein the first heating mat overlaps only on a part of the surface of resin-free parts of the first pair of metallic sheets of the first and second pairs, so that another part of the surface of the resin-free parts of the first and/or second pair of metallic sheets is not covered by the first heating mat, and wherein the turbine blade further comprises a third pair of metallic sheets layered individually on the first heating mat and on the surface of the metallic sheets of the first and second pairs sheets which are not covered by the first heating mat, and wherein the third pair of metallic sheets are also embedded within the shells by means of an subsequent composite manufacturing process, and are electrically in contact with the first heating mat and with the surface of the metallic sheets of the first and second pairs of metallic sheets which are not covered by the first heating mat.

4. A wind turbine blade according to claim 1, wherein a first shell half has a first pair of metallic sheets, and a second shell half is free of metallic sheets, and wherein a part of the first heating mat is layered on the external surface of the first shell half and on the resin-free parts of the first pair of metallic sheets, and another part of the first heating mat is layered on the outer surface of the second shell half, the turbine blade further comprising a third pair of metallic sheets, each one of these metallic sheets layered individually on the first heating mat and on the surface of the resin-free parts of the metallic sheets of the first pair of sheets not covered by the first heating mat, and wherein the third pair of metallic sheets are embedded within the first and second shell halves by means of a subsequent composite manufacturing process, and are electrically in contact with the first heating mat and with the first pair of metallic sheets of the first shell half.

5. A wind turbine blade according to claim 1, wherein a first shell half has a first pair of metallic sheets, and a first heating mat layered on the adhesive tape-free parts of the metallic sheets of the first pair, and wherein the second shell half has a second pair of metallic sheets layered on the outer surface of the second shell half, and a second heating mat layered on the adhesive tape-free parts of the metallic sheets of the second pair of metallic sheets, wherein the turbine blade further comprises a third heating mat layered on part of the resin-free parts of the metallic sheets of the first and second shell halves, and wherein the first, second and third heating mats are embedded within the first and second shell halves, such that the third heating mat is electrically in contact with the metallic sheets of the first and second shell halves.

6. A wind turbine blade according to claim 5, wherein the third heating mat is also layered on part on the first and second heating mats, such that the third heating mat is electrically in contact also with the first and second heating mats.

7. A wind turbine blade according to claim 5, further comprising a third pair of metallic sheets layered on the third heating mat and on the resin-free surfaces of the first and second pairs of metallic sheets.

8. A wind turbine blade according to any of the preceding claims, further comprising electric wires connected to the metallic sheets of the first and/or second pairs, for circulating a current through the heating mats to operate as Ice Protection System.

9. A wind turbine blade according to any of the preceding claims, wherein at least one layer of composite material is layered on the metallic sheets of the first, second or third pairs.

10. A wind turbine blade according to any of the preceding claims, wherein at least one of the first, second or third heating mats, is made of a carbon fiber material.

11. Method for manufacturing a wind turbine blade integrating an Ice Protection System, the method comprising the steps of:
manufacturing first and second shell halves by means of a resin infusion process, and wherein at least one of the shell halves is manufactured by means of the following process:
layering a first pair of metallic sheets on one of the sides of a dry laminate, wherein the metallic sheets are layered at different radiuses of the dry laminate, and wherein a part or all of the outer surface of the metallic sheets are covered by a protective material,
enclosing the dry laminate into a closed mould formed by a rigid mould and a vacuum bag, in a way that the side of the dry laminate having the metallic sheets is facing the rigid mould, and the other side of the dry laminate is facing the vacuum bag,
infusing resin into the closed mould by generating vacuum inside the closed mould,
curing the resin so as to form a rigid shell half,
demoulding the rigid shell half and removing the protective material, so that resin free surfaces on the metallic sheets are exposed,
bonding the two rigid shells at their leading and trailing edges, so as to configure the turbine blade,
layering a first heating mat made of an electrically conductive material, on the resin-free parts of the metallic sheets, such that the first heating mat is electrically in contact with the resin-free parts of the metallic sheets, and bonding the first heating mat to the turbine blade by means of a subsequent composite manufacturing process which comprises a second resin infusion process as the one used for the manufacture of the shell halves, or it comprises a "hand lay-up" in which dry fibers are impregnated by hand with the resin and then vacuum is applied while curing the resin.

12. Method according to any of the claim 11, wherein the first and second shell halves are manufactured to have a pair of metallic sheets, and wherein the first heating mat is also layered on the resin-free parts of both pairs of metallic sheets before the subsequent composite manufacturing process, and wherein the first heating mat is layered on the shell halves once they have been assembled together.

13. Method according to claim 11 or 12, wherein the first heating mat is layered to overlap only on a part of the surface of resin-free parts of the metallic sheets, so that another part of the surface of the resin-free parts of the metallic sheets is not covered by the first heating mat, and wherein a third pair of metallic sheets are layered individually on the first heating mat and on the surface of the metallic sheets of the first pair of sheets which are not covered by the first heating mat, such that by means of the subsequent composite manufacturing process, the third pair of metallic sheets get bonded and electrically in contact with the first heating mat and with the parts of the metallic sheets which are not covered by the first heating mat.

14. Method according to any of the claim 12, wherein the first heating mat is layered only on the resin-free parts of the first pair of metallic sheet, and a second heating mat is layered only on the resin-free parts of the second pair of metallic sheets, and wherein a third heating mat is layered on the resin-free parts of the first and second pairs of metallic sheets, and optionally also overlapping the first and second heating mats.

15. Method according to claims 11 to 13, wherein at least one of the first, second or third heating mats, is made of a carbon fiber material.
